(19) **Europäisches Patentamt**

**European Patent Office**

**Office européen des brevets**

(11) Veröffentlichungsnummer: **0 526 858 B1**

(12) # EUROPÄISCHE PATENTSCHRIFT

(45) Veröffentlichungstag der Patentschrift: **10.05.95**

(51) Int. Cl.6: **C09J 175/00**, C08J 5/18

(21) Anmeldenummer: **92113145.4**

(22) Anmeldetag: **01.08.92**

(54) **Verwendung von Folien aus Polyurethanen zum Verkleben.**

(30) Priorität: **06.08.91 DE 4125957**

(43) Veröffentlichungstag der Anmeldung:
**10.02.93 Patentblatt 93/06**

(45) Bekanntmachung des Hinweises auf die Patenterteilung:
**10.05.95 Patentblatt 95/19**

(84) Benannte Vertragsstaaten:
**AT BE CH DE DK ES FR GB GR IT LI LU NL PT SE**

(56) Entgegenhaltungen:
**EP-A- 0 004 939**
**EP-A- 0 158 086**
**EP-A- 0 442 786**
**DE-A- 1 186 024**
**DE-A- 3 902 019**

(73) Patentinhaber: **Elf Atochem Deutschland GmbH**
**Uerdinger Strasse 5**
**D-40474 Düsseldorf (DE)**

(72) Erfinder: **Alex, Patrick**
**Villa de Pommiers 2,**
**Pecerse**
**F-91470 Limours (FR)**
Erfinder: **Piard, André**
**Clos "Boivin-Champeaux",**
**F-27300 Bernay (FR)**
Erfinder: **de Jong, Eduard**
**Mirabellengarten 3**
**W-5210 Troisdorf (DE)**

(74) Vertreter: **Türk, Gille, Hrabal, Leifert**
**Brucknerstrasse 20**
**D-40593 Düsseldorf (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft die Verwendung von Folien aus thermoplastischen Polyurethanen mit einem Zusatz von 5 bis 20 Gew.-% Polyetheramid-Blockcopolymeren und/oder Polyetherester-Blockcopolymeren bezogen auf das Gewicht der Polyurethane zum Verkleben mit anderen Substraten.

Die nicht vorveröffentlichte europäische Patentanmeldung 91400298 (EP-A-0 442 786) offenbart ein Verfahren zur Verarbeitung durch Extrusion von Mischungen auf TPU-Basis gekennzeichnet durch die Beimischung eines oder mehrerer aus thermoplastischen Elastomeren auf Polyester- und/oder Polyamidbasis ausgewählten Modifizierungsmittel. Gemäß den Beispielen dieser Anmeldung gibt es keine Hinweise auf Klebefolien, insbesondere solche, die mit Polyurethanschaum hinterschäumt werden.

Nach dem bekannten Coextrusionsverfahren (DE-A-2114065, US-A-3880691) können elastomere Folien aus z. B. Polyurethanen hergestellt werden, die keine Trennmittel bzw. Abstandsmittel enthalten und deshalb vorzüglich geeignet sind z. B. zum Hinterschäumen mit Polyurethanschaum. Der Nachteil dieses Verfahrens besteht darin, daß eine aufwendige Coextrusionsanlage (zwei Extruder und Blaskopf mit 2 konzentrischen Ringdüsen) verwendet werden muß und eine Trennfolie anfällt, die im wesentlichen ein Abfallprodukt ist.

Es ist andererseits bekannt, Folien aus thermoplastischen Kunststoffen, z.B. Polyurethanen und dergleichen, nach dem Monofolien-Blasextrusionsverfahren herzustellen. Dabei wird durch eine Ringdüse mittels eines Extruders ein Folienschlauch geblasen. Dieser wird nach dem Abkühlen flachgelegt, auf beiden Seiten geschnitten, so daß zwei aufeinander liegende Folienbahnen (Flachfolien) entstehen, die dann getrennt und aufgewickelt werden.

Bei diesem Verfahren muß den relativ stark klebenden thermoplastischen Kunststoffen vor dem Blasen ein inneres Trennmittel bzw. Abstandsmittel, spätestens im Extruder, zugesetzt werden, da sonst beim Flachlegen die Folienbahnen (Flachfolien) miteinander verkleben, so daß sie nicht mehr in zwei getrennten Folienbahnen einwandfrei aufgewickelt werden können.

Zumindest besteht die Gefahr, daß die aufgewickelten getrennten Folienbahnen bei der Lagerung verblocken, da nicht zu vermeiden ist, daß eine Nachkristallisation stattfindet. Die Mittel, die zur Vermeidung dieses Verklebens oder Verblockens nach dem Stand der Technik eingesetzt werden, sind Wachse und/oder anorganische Zusätze wie sie z. B. beschrieben sind in A) Kunststoff-Taschenbuch Saechtling 24. Ausgabe Hanser Verlag; B) Kunststoff-Handbuch 7, Polyurethane, Becker/Braun; C) Kunststoffe 80 (1990) 7, S. 827 ff; D) HÖCHST Kunststoff-Additive Produktmerkblatt November 1988; E) DE-A-2429790, EP-B1-0195899. Der Zusatz dieser Mittel bewirkt jedoch eine verminderte Klebkraft insgesamt, d. h. auch z. B. beim späteren Einsatz als zu hinterschäumende Folien. Der Polyurethanschaum, der auf diese Folien aufgeschäumt wird, hat eine unzureichende Haftung an der Folie.

Man kann die Neigung zum Verkleben bei der Herstellung und Lagerung der Folie auch dadurch herabsetzen, daß man die Härte der Folien heraufsetzt. Wenn z. B. Polyurethanfolien einer Stärke von bis zu etwa 100 μm eine Shore-Härte von etwa 92 A oder mehr aufweisen, kann die Herstellung der Folien im wesentlichen problemlos erfolgen. Sie besitzen auch beim Hinterschäumen noch eine ausreichende Klebkraft gegenüber dem Polyurethanschaum. Die Folien besitzen aber aufgrund der hohen Härte eine unerwünscht hohe Steifigkeit und reduzierte Elastizität sowie eine niedrige Wasserdampfdurchlässigkeit, was den Sitzkomfort bzw. Klimakomfort der hinterschäumten Folien bei der Verwendung als Sitzpolster in Polstermöbeln, z. B. Automobilsitzen, vermindert.

Der Erfindung liegt die Aufgabenstellung zugrunde, diese Nachteile zu vermeiden.

Gegenstand der Erfindung ist die Verwendung von Folien aus thermoplastischen Polyurethanen mit einer Shore-Härte von 75 A bis 92 A (DIN 53505) und mit einem Zusatz von 5 bis 20 Gew.-% Polyetheramid-Blockcopolymere und/oder Polyetherester-Blockcopolymere bezogen auf das Gewicht der Polyurethane zum Verkleben mit anderen Substraten. Bevorzugt sind Folien, die erhältlich sind nach dem Monofolien-Blasextrusionsverfahren. Es ist weiterhin bevorzugt, daß diese Folien Polyetheramid-Blockcopolymere enthalten.

Gegenstand der Erfindung ist weiterhin die Verwendung eines Zusatzes von 5 bis 20 Gew.-% Polyetheramid-Blockcopolymere und/oder Polyetherester-Blockcopolymere zu thermoplastischen Polyurethanen mit Shore-Härten von 75 A bis 92 A bezogen auf das Gewicht der thermoplastischen Urethane zur Verminderung des Verklebens und/oder Blockens von aus thermoplastischen Polyurethanen nach dem Blasextrusionsverfahren hergestellten Monofolien. Gegenstand der Erfindung ist weiterhin, die Verwendung der Folien zum zum Hinterschäumen mit Polyurethanschäumen.

Unter Verwendung eines Zusatzes von Peba (Polyetheramid-Blockcopolymere) und/oder Polyetherester-Blockcopolymere tritt der außerordentlich überraschende Effekt ein, daß einerseits die Neigung zum Verkleben und zum Verblocken beim Flachlegen, Schneiden und Aufwickeln der im Folienblasverfahren hergestellten Folie auch bei niedrigen Shore-Härten soweit vermindert werden, daß die Folien einwandfrei aufgewickelt und gelagert werden können, andererseits aber diese Folien bei hoher Elastizität und Wasserdurchlässigkeit eine ausgezeichnete Klebkraft z. B. zum hinterschäumten Polyurethanschaum aufweisen.

Als Peba im Sinne der Erfindung können Polyetheramid-Blockcopolymere gemäß DE-A-2523991, US-A-4331786 und DE-A-2856787 dienen.

Die Polyetheramid-Blockcopolymere können vor allem aus Polykondensaten von Homo- oder Copolyamiden mit reaktiven Endgruppen mit Homo- oder Copolyethern mit reaktiven Endgruppen bestehen, u. a.:

a) Homo- und/oder Copolyamide mit Aminkettenenden mit Homo- oder Copolyoxyalkylenen mit Carboxylkettenenden.

b) Homo- oder Copolyamide mit Carboxylkettenenden mit Homo- oder Copolyoxyalkylenen mit Aminkettenenden.

c) Homo- oder Copolyamide mit Carboxylkettenenden mit Homo- oder Copolyetherdiolen, den sogenannten Polyetheresteramiden, die insbesondere als Modifiziermittel für TPU bevorzugt werden.

Das durchschnittliche Molekulargewicht (Zahlenmittel) dieser Polyamide liegt im allgemeinen zwischen 500 und 10 000 und meistens zwischen 600 und 5000. Die Polyamide werden meist aus Polyamid 6, 6.6, 6.12, 11, 12 oder 12.12 und/oder aus amorphem Polyamid oder aus Copolyamid gebildet, die aus der Polykondensation ihrer Monomere resultieren. Besonders bevorzugt sind Polyamid 11, 12 und/oder 12.12.

Das durchschnittliche Molekulargewicht (Zahlenmittel) der Polyether liegt im allgemeinen zwischen 200 und 6000 und meist zwischen 600 und 3000.

Die Polyether bestehen meist im wesentlichen aus Polytetramethylenglykol (PTMG). Außer PTMG können sie Polyethylenglykol (PEG) und/oder Polypropylenglykol (PPG) enthalten. Besonders bevorzugt sind Polytetramethylenglykol (PTMG) und Polyethylenglykol (PEG).

Die inherente Viskosität der Polyetheramid-Blockcopolymere liegt zweckmäßig zwischen 0,8 und 2,05. Sie wird in Metakresol bei 20°C mit einer Anfangskonzentration von 0,5 g Polymer in 100 g Metakresol gemessen.

Die Polyetheramid-Blockcopolymere können gewichtsmäßig zu 5 bis 85 % aus Polyether und zu 95 bis 15 % aus Polyamiden gebildet werden. Das zweckmäßigste Verhältnis ist gewichtsmäßig 30 bis 85 % aus Polyether und 70 bis 15 % aus Polyamid. Die bevorzugten Polyetheramid-Blockcopolymere sind die, deren Polyether im wesentlichen aus PTMG und/oder PEG bestehen und vor allem die, deren Polyamide Kondensate aus Polyamid-11, -12 und/oder -12,12 sind.

Die Menge an Peba, die dem TPU (thermoplastischen Polyurethan) zugesetzt wird, beträgt vorzugsweise mindestens 8 Gew.-%, besonders bevorzugt mindestens 10 Gew. -%. Die obere Grenze liegt vorzugsweise bei 15 Gew. -%. Die Gewichtsprozente sind dabei auf das Gewicht des thermoplastischen Polyurethan bezogen.

Polyetherester-Blockcopolymere sind Kondensationsprodukte von aromatischen Dicarbonsäuren, niedermolekularen Polyoxyalkylenglykolen und kurzkettigen Diolen mit segmentartigem Aufbau. Sie bestehen zweckmäßig aus einem harten kristallinen Segment, das aus kurzkettigen Diolen (Butandiol, Diethylenglykol) und Dicarbonsäuren, vorzugsweise aus aromatischen Dicarbonsäuren, wie Terephtalsäure, gebildet wird und einem weichen Segment aus Polyoxyethylenglykolen, wie sie oben im Zusammenhang mit den Polyetheramid-Blockcopolymeren beschrieben wurden. Die Molekulargewichte (Zahlenmittel) der Hartsegmente liegen im allgemeinen zwischen 500 und 10 000, vorzugsweise zwischen 600 und 5000. Die Molekulargewichte (Zahlenmittel) der Weichsegmente liegen zweckmäßig zwischen 200 und 6000, vorzugsweise zwischen 600 und 3000.

Die inherente Viskosität der Polyetherester-Blockcopolymere liegt zweckmäßig zwischen 0,5 und 2,0. Sie wird in Metakresol bei 20° C mit einer Anfangskonzentration von 0,5 g Polymer in 100 g Metakresol gemessen.

Als TPU im Sinne der Erfindung können thermoplastische Polyurethane gemäß EP-B1-0158086, DE-A-2817457, DE-A-2817456, EP-A-0311278, DE-A-2429790 oder Kunststoff Taschenbuch Saechtling 24. Ausgabe, Hanser Verlag verwendet werden. Die thermoplastischen Polyurethane bzw. TPU werden hergestellt durch Umsetzung eines Diisocyanats, z.B. des Di(p-Isocyanatophenyl)-methans, mit einem aliphatischen polymeren Polyol mit einem Molekulargewicht über 600, z.B. auf der Basis eines Polyester- oder Polyetherdiols, wie Polypropylenglykol, Polyethylenadipat, Polytetramethylenadipat oder Ethylenadipat/Tetramethylenadipat-Copolyester, und Kettenverlängerung des Reaktionsproduktes mit einem Diol eines Molekulargewichtes von weniger als 250, z.B. mit 1,4-Butandiol.

Die Shore-Härte liegt zweckmäßig bei höchstens 90 A. Die untere Grenze der Shore-Härte beträgt zweckmäßig 80 A.

Zum Hinterschäumen werden die auf diesem Stand der Technik üblichen schaumbildenden Produkte eingesetzt, z. B. sogenannte Zweikomponenten-Polyurethane,wie sie z. B. beschrieben sind in Kunststoff-Taschenbuch Saechtling, 24. Ausgabe, Hanser Verlag oder Kunststoff-Handbuch 7, Polyurethane, Bekker/Braun. Derartige Hinterschäumungen werden, wie eingangs erwähnt, in größerem technischen Umfang durchgeführt.

Die Obergrenze der Stärke der hergestellten Folien liegt zweckmäßig bei etwa 100 $\mu$m, vorzugsweise bei etwa 80 $\mu$m und besonders bevorzugt bei etwa 60 $\mu$m. Es ist bevorzugt, die Folien so dünn wie möglich zu gestalten, um Material zu sparen. Andererseits müssen sie die erforderlichen Festigkeitseigenschaften und sonstigen Eigenschaften haben.

Die gleichen Kriterien gelten für die untere Grenze der Stärke der Folien. Diese liegt zweckmäßig nicht unter 20 $\mu$m, vorzugsweise nicht unter 25 $\mu$m.

Beispiele:

Die in den nachfolgenden Tabellen beschriebenen Zusammensetzungen wurden auf eine Monofolien-Blasanlage extrudiert und auf ihre Folieneigenschaften geprüft.

Anlagenkonfiguration:

| | |
|---|---|
| Trockner: | Handelsüblicher kontinuierlich arbeitender Lufttrockner Bauart: SOMOS® |
| Dosierstation: | Volumetrische Dosierstation zur kontinuierlichen Dosierung von Additiven |
| Extruder: | Handelsübliche 150 mm Blasfolien-Extrusionsanlage mit kühlbaren Einzugsnuten; 5 Heizzonen, kühlbar mit Wasser; 3-Zonenschnecke mit Kompression 1:2,4 mit Mischteil; Gangtiefe der Einzugszone 10,5 mm; Gangtiefe der Meteringzone 4,3 mm; Siebpaket 1 x 100, 2 x 400, 1 x 900 Maschen/cm$^2$. |
| Werkzeug: | Einschichtfolienwerkzeug in Tragringkonstruktion, 700 mm Durchmesser |
| Kühlung: | Luftring mit aerodynamischem Luftausgleich zur Kühlung der Folienblase |

Flachlegung

| | |
|---|---|
| Abzug: | Abquetschwalzen mit Siliconkautschukbeschichtung zum Zusammenlegen der Folienblase |
| Schneidstation: | Beidseitiger Kantenbeschnitt der flachgelegten Folienblase |
| Wickler: | Tandemwickler |

Beispiel 1:

Das thermoplastische Polyurethan TPU 1 wurde in einem Somostrockner kontinuierlich während 7 Stunden auf eine Restfeuchtigkeit von 0,01 % getrocknet und mit einem handelsüblichen Polyetheramid-Blockcopolymere (Peba 40) einer Restfeuchtigkeit von 0,06 % in dem in der Tabelle angegebenen Mischungsverhältnis gemischt und in den Vorratsbehälter der Extrusionsanlage befördert.

Extruder- und Werkzeugtemperatur wurden auf 200° C eingestellt. Mit einer Schneckendrehzahl von 18 Upm wurde die Mischung extrudiert. Es stellte sich ein Druck vor/hinter dem Sieb von 340/270 bar ein. Die Massetemperatur, gemessen im Hals zwischen Sieb und Werkzeug, betrug 205°C. Der aus der Düse austretende Schmelzschlauch wurde auf einen Durchmesser von ca. 1000 mm aufgeblasen, gekühlt und nach ca. 10 m mittels Abquetschwalzen flachgelegt und über Umlenkwalzen einem Zwischenabzug zugeführt. Hier wurden die Ränder beschnitten und die beiden Folienbahnen getrennt und auf Tandemwickler mittels eines Wickelzuges von 2,7 kp auf 1500 mm Pappkerne aufgewickelt. Es traten an den Abquetschwalzen keine Klebeprobleme auf. Die Trennkräfte nach dem Schneiden waren so gering, daß ein problemloses Trennen und Wickeln möglich war.

Von der resultierenden Folie wurden Blockkraft, Trennkraft, Wandstärke, Reißfestigkeit, Reißdehnung, 100 % Spannung, Weiterreißfestigkeit und Hinterschäumbarkeit geprüft.

Beispiele 2 bis 6 wurden in analoger Weise mit den in den Tabellen angegebenen Parametern durchgeführt.

Vergleichsbeispiele 1 bis 4

Die in der Tabelle angegebenen Zusammensetzungen wurden wie oben beschrieben extrudiert und geprüft.

Erklärungen zu den Tabellen

1) eingesetzte TPU:
A) TPU 1:
Lineares Esterurethan, Shore-Härte etwa 85 A, partiell kristallin, gleitmittelfrei, hochviskos, Schmelzindex, gemessen in Anlehnung an DIN 53735 bei 211 N Belastung und 190° C, von 4 g pro 10 Minuten.
Chemische Basis: Di(p-Isocyanatophenyl)methan; Butandioladipat, Molekulargewicht (Zahlenmittel) etwa 2000; Butandiol als Kettenverlängerer
B) TPU 2:
Lineares Etherurethan, Shore-Härte etwa 85, partiell kristallin, gleitmittelfrei, hochviskos, Schmelzindex, gemessen in Anlehnung an DIN 53735 bei 211 N Belastung und 190° C, von etwa 12 g pro 10 Minuten; Basis: Di(p-isocyanatophenyl)methan; Polytetramethylenglykol, Molekulargewicht (Zahlenmittel) etwa 1000; Butandiol als Kettenverlängerer.
2) eingesetzte Peba:
A) Peba 40:
Handelsübliches Polyetheramid-Blockcopolymere auf Basis von Polyamid 12 und Polytetramethylenglykol, Shore-Härte 40 D.
B) Peba 55:
Handelsübliches Copolyetheramid-Blockopolymere auf Basis von Polyamid 12 und Polytetramethylenglykol, Shore-Härte 55 D.
3) Additive
A) Calciumstearat
B) Wachs (Ethylenbisstearamid)
4) Ausschäum-Test
Der Test dient der Aussage, ob eine Folie hinterschäumbar ist. Ermittelt wird die Schaumhaftung.
In ein geeignetes Gefäß werden
40 g handelsübliches Polyesterdiol (z. B. Elastoflex® W 5549 Komp.A)
20 g handelsüblichen Isocyanatvernetzer (z. B. Komp.B Typ 5534 der Fa. Elastogran®)
eingewogen, gut durchmischt und auf die zu prüfende Folie gegossen. Die Flüssigkeit schäumt nach ca. 5 min auf und bildet einen Schaumkuchen. Nach 24 h wird die Haftung manuell geprüft.
Schaumausriß bedeutet 1, keine Haftung 5.
5) Bestimmung der Blockkraft an Folien
Diese Methode wurde von der Anmelderin für Feinfolien entwickelt.

Benötigte Geräte:

1. Heißsiegelgerät (HSG) mit der Möglichkeit, einen Druck von 5 bar, eine Verweildauer von 10 min und eine Temperatur an der Ober- und Unterheizung von 60° C einzustellen.
2. Zugprüfmaschine um die Blockkraft an den Probekörpern zu bestimmen.
3. Schneidmesser zur Probenherstellung
4. Ober- und Unterfolie (Teflon-®) zur Probenherstellung
5. Glasplatte Schneidunterlage
6. Teflonstreifen um die Verblockung durchzuführen.

Arbeitsweise:

1. Probekörper herstellen

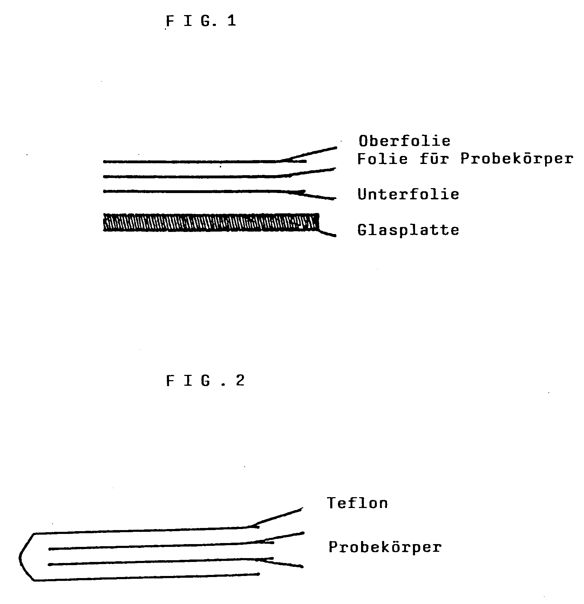

Probenbreite = 15 mm
Probenlänge = 100 mm
Zwei Probekörper mit diesen Abmessungen werden mit einem Schneidmesser herausgeschnitten. Um einen einwandfreien Schnitt zu gewährleisten, muß bei Monofolien mit einer Ober- und Unterfolie gearbeitet werden (s. Fig. 1).

## 2. Probekörper vorbereiten

Die Probekörper werden aufeinander gelegt und mit Teflon und zwei Büroklammern fixiert (s. Fig. 2).

## 3. Probekörper verblocken

Der so vorbereitete Probekörper wird bei den Parametern
Druck 5 bar
Zeit 10 min
Temp. 60°C
(beide Heizbacken) verblockt. Die Verblockungsfläche des Probekörpers beträgt 15 mm x 10 mm.

## 4. Beurteilung der Verblockung

Nach dem Verblocken ist darauf zu achten, daß die Folien exakt aufeinander liegen (sonst Verfälschung der Prüfbreite) und die Verblockung ganzflächig erfolgt ist (gleichmäßig aussieht). Mögliche Ursache für eine nicht ganzflächige Verblockung sind zu große Schichtdickenschwankungen in der Folie.

## 5. Ermittlung der Blockkraft

Der Probekörper wird spannungslos in die Prüfklemmen eingespannt, wie beim Trennversuch DIN 53530. Bei einer Prüfgeschwindigkeit von 100 mm/min wird die Blockkraft ermittelt.

## 6. Auswertung

Die Auswertung erfolgt nach DIN 53539. Die Blockkraft wird in N/15 mm angegeben.
6) Ermittlung der Trennkraft
Zur Ermittlung der Trennkraft werden von dem extrudierten und flachgelegten Schlauch vor dem Trennen Probekörper von 15 mm Breite und 100 mm Länge geschnitten.
Von diesen Probekörpern wird die Trennkraft nach DIN 53530, wie oben zur Ermittlung der Blockkraft beschrieben, ermittelt.
7) Abkürzungen in der Tabelle
Tle: Gewichtsteile

| | | Beispiel 1 | Beispiel 2 | Beispiel 3 | Beispiel 4 | Vergleichs-beipiel 1 | Vergleichs-beispiel 2 |
|---|---|---|---|---|---|---|---|
| | TPU | 90 Tle TPU 1 | 90 Tle TPU 1 | 90 Tle TPU 1 | 90 Tle TPU 1 | 100 Tle TPU 1 | 100 Tle TPU 1 |
| | Polyetheramid | 10 Tle PEBA.40 | 10 Tle PEBA.40 | 10 Tle PEBA.40 | 10 Tle PEBA.55 | | - |
| | Additiv | - | - | - | - | - | 0,1 Tle Wachs |
| E X T R U S I O N | Drehzahl | 18 upm | 25 upm | 35 upm | 18 upm | 18 upm | 18 upm |
| | Stromaufn. | 13 A' | 13 A' | 14 A' | 14 A' | 17 A' | 15 A' |
| | Druck vor Sieb | 200 bar | 210 bar | 210 bar | 340 bar | 350 bar | 340 bar |
| | Druck nach Sieb | 130 bar | 140 bar | 140 bar | 270 bar | 290 bar | 280 bar |
| | Massetemp. | 196 °C | 198 °C | 198 °C | 199 °C | 200 °C | 199 °C |
| | Folie | Folie ist sehr leicht zu trennen<br><br>kein Ver-blocken auf dem Wickel | Folie ist sehr leicht zu trennen<br><br>kein Ver-blocken auf dem Wickel | Folie ist leicht zu trennen<br><br>kein Ver-blocken auf dem Wickel | Folie ist sehr leicht zu trennen<br><br>kein Ver-blocken auf dem Wickel | Folie ist nicht zu trennen<br><br>Verblocken auf dem Wickel | Folie ist zu trennen<br><br>kein Ver-blocken auf dem Wickel |
| | Wandstärke nach DIN 53370 | 37 $\mu$m | 41 $\mu$m | 37 $\mu$m | 38 $\mu$m | keine Meßwerte ermittelbar | 38 $\mu$m |
| | Block-Kraft [N/15mm] | 0,22 | 0,22 | 0,22 | 0,22 | | 0,22 |
| | Trennkraft [N/15mm] | 0,05 | 0,03 | 0,05 | 0,03 | | 0,04 |
| | Reißfestigkeit nach DIN 534555 [MPa] | 90 | 80 | 90 | 70 | | 70 |
| | Reißdehnung nach DIN 53455 [%] | 585 | 682 | 585 | 540 | | 540 |
| | Spannung bei 100% Dehnung nach DIN 53455 [MPa] | 10,5 | 8,1 | 10,5 | 7,1 | | 7,1 |
| | Weiterreißfestigkeit nach DIN 53515 [N/mm] | 73 | 77 | 73 | 78 | | 67 |
| | Anschäumtest | 1 | 1 | 1 | 1 | | 5 |

EP 0 526 858 B1

| | Beispiel 5 | Beispiel 6 | Vergleichs-beispiel 3 | Vergleichs-beispiel 4 |
|---|---|---|---|---|
| TPU | 90 Tle TPU 2 | 90 Tle TPU 2 | 100 Tle TPU 2 | 100 Tle TPU 2 |
| Polyetheramid | 10 Tle PEBA.40 | 10 Tle PEBA.55 | - | - |
| Additiv | - | - | 0,05 Tle Ca-Stearat | 0,2 Tle Wachs |
| EXTRUSION Drehzahl | 18 upm | 18 upm | 18 upm | 18 upm |
| Stromaufn. | 14 A' | 15 A' | 14 A' | 14 A' |
| Druck vor Sieb | 270 bar | 290 bar | 280 bar | 280 bar |
| Druck nach Sieb | 235 bar | 240 bar | 240 bar | 230 bar |
| Massetemp. | 193 °C | 194 °C | 196 °C | 195 °C |
| Folie | Folie ist leicht zu trennen / kein Ver-blocken auf dem Wickel | Folie ist leicht zu trennen / kein Ver-blocken auf dem Wickel | Folie ist schwer zu trennen / verblockt auf dem Wickel | Folie ist zu trennen / kein Ver-blocken auf dem Wickel |
| Wandstärke nach DIN 53370 | 46 µm | 47 µm | 53 µm | 53 µm |
| Block-Kraft [N/15mm] | 0,7 | 1,5 | 0,9 | 0,1 |
| Trennkraft [N/15mm] | 0,14 | 0,17 | 0,42 | 0,1 |
| Reißfestigkeit nach DIN 534555 [MPa] | 70 | 60 | 80 | 70 |
| Reißdehnung nach DIN 53455 [%] | 660 | 540 | 590 | 570 |
| Spannung bei 100% Dehnung nach DIN 53455 [MPa] | 8,2 | 9,3 | 9,5 | 9,5 |
| Weiterreißfestigkeit nach DIN 53515 [N/mm] | 65 | 70 | 55 | 55 |
| Anschäumtest | 1 | 1 | 1 | 5 |

## Patentansprüche

1. Verwendung von Folien aus thermoplastischen Polyurethanen mit einer Shore-Härte von 75 A bis 92 A und mit einem Zusatz von 5 bis 20 Gew.-% Polyetheramid-Blockcopolymereund/oder Polyetherester-Blockcopolymere bezogen auf das Gewicht der Polyurethane zum Verkleben mit anderen Substraten.

2. Verwendung nach Anspruch 1, dadurch gekennzeichnet, daß die Folien nach dem Monofolien-Blasextrusionsverfahren erhältlich sind.

8

3. Verwendung nach Anspruch 2, dadurch gekennzeichnet, daß die Folien Polyetheramid-Blockcopolymere enthalten.

4. Verwendung nach einem oder mehreren der Ansprüche 1 bis 3, dadurch gekennzeichnet, daß die Folien eine Dicke bis maximal 100 $\mu$m aufweisen.

5. Verwendung nach einem oder mehreren der Ansprüche 1 bis 4, dadurch gekennzeichnet, daß das Polyetheramid-Blockcopolymere auf PTMG und/oder PEG basiert.

6. Verwendung nach einem oder mehreren der Ansprüche 1 bis 5, dadurch gekennzeichnet, daß das Polyetheramid-Blockcopolymere auf PA-11, PA-12 und/oder PA-12.12 basiert.

7. Verwendung nach einem oder mehreren der Ansprüche 1 bis 6, dadurch gekennzeichnet, daß die thermoplastischen Polyurethane eine Shore-Härte von 80 A bis 90 A aufweisen.

8. Verwendung von Folien nach einem oder mehreren der Ansprüche 1 bis 7 zum Hinterschäumen mit Polyurethanschaum.

9. Verwendung eines Zusatzes von 5 bis 20 Gew.-% Polyetheramid-Blockcopolymeren und/oder Polyetherester-Blockcopolymeren zu thermoplastischen Polyurethanen mit Shore-Härten von 75 A bis 92 A, bezogen auf das Gewicht der thermoplastischen Polyurethane, zur Verminderung des Verklebens und/oder Blockens von aus thermoplastischen Polyurethanen nach dem Blasextrusionsverfahren hergestellten Monofolien.

**Claims**

1. Use of films made from thermoplastic polyurethanes with a Shore hardness of 75 A to 92 A and having an addition of 5 to 20 wt.% of polyether amide block copolymers and/or polyether ester block copolymers related to the weight of polyurethanes for bonding with other substrates.

2. Use according to claim 1, characterised in that the films may be obtained using the single layer blown film extrusion process.

3. Use according to claim 2, characterised in that the films contain polyether amide block copolymers.

4. Use according to one or more of claims 1 to 3, characterised in that the films have a maximum thickness of UP to 100 $\mu$m.

5. Use according to one or more of claims 1 to 4, characterised in that the polyether amide block copolymers are based on PTMG and/or PEG.

6. Use according to one or more of claims 1 to 5, characterised in that the polyether amide block copolymers are based on PA-11, PA-12 and/or PA-12,12.

7. Use according to one or more of claims 1 to 6, characterised in that the thermoplastic polyurethanes have a Shore hardness of 80 A to 90 A.

8. Use of films according to one or more of claims 1 to 7 for foam-backing with polyurethane foam.

9. Use of an addition of 5 to 20 wt.% of polyether amide block copolymers and/or polyether ester block copolymers to thermoplastic polyurethanes with Shore hardness values of 75 A to 92 A related to the weight of the thermoplastic polyurethanes to reduce sticking and/or blocking of single layer films made from thermoplastic polyurethanes using the blown film extrusion process.

**Revendications**

1. Utilisation de feuilles de polyuréthannes thermoplastiques présentant une dureté Shore de 75 A à 92 A avec une addition de 5 à 20 % en poids de copolymères blocs polyétheramides et/ou de copolymères blocs polyétheresters, rapporté au poids de polyuréthannes, pour coller avec d'autres substrats.

2. Utilisation selon la revendication 1, caractérisée en ce que les feuilles peuvent être obtenues par le procédé d'extrusion-soufflage monofeuilles.

3. Utilisation selon la revendication 2, caractérisée en ce que les feuilles contiennent des copolymères blocs polyétheramides.

4. Utilisation selon l'une ou plusieurs des revendications 1 à 3, caractérisée en ce que les feuilles ont une épaisseur maximale de 100 $\mu$m.

5. Utilisation selon l'une ou plusieurs des revendications 1 à 4, caractérisée en ce que le copolymère bloc polyétheramides est à base de PTMG et/ou de PEG.

6. Utilisation selon l'une ou plusieurs des revendications 1 à 5, caractérisée en ce que le copolymère bloc polyétheramides est à base de PA-11, PA-12 et/ou PA 12.12.

7. Utilisation selon l'une ou plusieurs des revendications 1 à 6, caractérisée en ce que les polyuréthannes thermoplastiques présentent une dureté Shore comprise entre 80 A et 90 A.

8. Utilisation des feuilles selon l'une ou plusieurs des revendications 1 à 7 pour former une mousse arrière de polyuréthanne.

9. Utilisation d'une addition de 5 à 20 % en poids de copolymères blocs polyétheramides et/ou de copolymères blocs polyétheresters à des polyuréthannes thermoplastiques présentant une dureté Shore comprise entre 75 A et 92 A, rapporté au poids de polyuréthannes thermoplastiques, pour réduire le collage et/ou l'adhérence par contact des monofeuilles en polyuréthannes thermoplastiques obtenues par le procédé d'extrusion-soufflage.

F I G. 1

Oberfolie
Folie für Probekörper

Unterfolie

Glasplatte

F I G . 2

Teflon

Probekörper